# EUROPEAN PATENT APPLICATION

(11) **EP 4 800 969 A1**
(43) Date of publication of application: **02.09.2026**
(21) Application number: 25305270.8
(22) Date of filing: 28.02.2025
(51) Int. Cl.: H04L 9/08

(54) **RESHARING OF SECRETS OVER SECURE CHANNELS, FOR ANY THRESHOLD**

(71) Applicant: Institut Mines Telecom, 91120 Palaiseau (FR)
(72) Inventor: RAMBAUD, Matthieu, 75005 Paris (FR)
(74) Representative: Vidon Brevets & Stratégie

(57) **Abstract**

The invention concerns a proactive secret resharing method for resharing a least one secret between an old committee, comprising old participants and a new committee *P'*_{[*n'*]} comprising *n'* new participants *P'ⱼ, j* ranging from 1 to *n',* each old participant at the beginning of a round:
- generates sub-shares of the ith-share;
- generates sub-shares of the ith-share of randomness;
- computes a vector of sub-shares by using a linearly homomorphic commitment scheme taking as input the ith-share and the ith-share of randomness;
- send to each new participant *P'ⱼ* a quadruple ( ${S}_{{I}^{- 1} \to \left[\left[n\right]\right]}^{@ i} ; {S}_{i \to \left[n′\right]} ; {s}_{i \to j} ; \hat{{s}_{ι \to j}}$).

## Description

### Technical field

The present invention concerns a method and a system for the intelligent management of data protection capacities in order to guarantee the protection of these data, considered as assets to be protected in their operation.

### Prior Art

Threshold cryptosystems are algorithms used by a number n of participants, called parties, for the purpose of processing secret data. They are parametrized by a threshold number t, such that if at most t -out-of-*n* parties are maliciously corrupt, then the following two (informal) guarantees hold. Privacy: no information on the data is leaked to the adversary (in a computational or information-theoretic sense, to be precised). Robustness as disclosed in R. Cramer, I. B. Damgård, and J. B. Nielsen. Secure Multiparty Computation and Secret Sharing. Cambridge University Press, 2015, also called guaranteed output delivery (GOD) as disclosed in C. Gentry et al. "YOSO: You Only Speak Once: Secure MPC with Stateless Ephemeral Roles". In: CRYPTO. 2021 or in G. Deligios, A. Goel, and C.-D. Liu-Zhang. "Maximally-Fluid MPC with Guaranteed Out- put Delivery". In: CRYPTO. 2023: all correct outputs (to be specified) are delivered to the intended entities (and only them) within a prescribed delay. A system is said to tolerate an honest majority if the threshold t can be set to any value (t < n/2). Some systems guarantee privacy up to a number D of corruptions, which we dub as the degree, which is potentially higher than t.

Examples are illustrated in R. Canetti, N. Makriyannis, and U. Peled. UC Non-Interactive, Proactive, Threshold ECDSA. ePrint 2020/492, merged into CCS'20. 2020. (t = 0 < D = n - 1), and in T. Yurek, Z. Xiang, Y. Xia, and A. Miller. "Long Live The Honey Badger: Robust Asynchronous DPSS and its Applications". In: USENIX. 2023 (any t < n/3 & D = n - t - 1) or (any t < n/2 & D = n - t - 1) . Flagship use-cases are distributed signing of transactions as disclosed in R. Canetti, N. Makriyannis, and U. Peled. UC Non-Interactive, Proactive, Threshold ECDSA. ePrint 2020/492, merged into CCS'20. 2020 or in T. Ruffing, V. Ronge, E. Jin, J. Schneider- Bensch, and D. Schröder. "ROAST: Ro- bust Asynchronous Schnorr Threshold Signatures". In: CCS. link to the blog of Block-stream. 2022 ; secure store as disclosed in F. Benhamouda et al. "Can a Public Blockchain Keep a Secret?" In: TCC. 2020, and on-chain witness encryption as disclosed in V. Goyal, A. Kothapalli, E. Masserova, B. Parno, and Y. Song. "Storing and Retrieving Secrets on a Blockchain". In: PKC. 2022, (deployed on the smart contract as disclosed in S. Saereesitthipitak and D. Zindros. Cas- siopeia: Practical On-Chain Witness Encryption. workshop of FC. link to the github. 2023; tossing of a common coin, as used in most blockchain protocols; and also multiparty computation (MPC) based on threshold homomorphic encryption (HE) schemes as disclosed in C. Gentry et al. "YOSO: You Only Speak Once: Secure MPC with Stateless Ephemeral Roles". In: CRYPTO. 2021 or in J. H. Cheon, W. Cho, and J. Kim. Improved Universal Thresholdizer from Threshold Fully Homomorphic Encryption. ePrint 2023/545. 2023.

In all of them, the n players hold secret shares with degree-t of one (or several) threshold secret key. Very roughly, any subset of t correctly generated shares varies independently of the secret, hence leaks no information on it. Whereas there exists a public algorithm that efficiently reconstructs the secret from any subset of t + 1 shares. It is to be noticed that in information-theoretically secure systems like in R. Cramer, I. B. Damgård, and J. B. Nielsen. Secure Multiparty Computation and Secret Sharing. Cambridge University Press, 2015 or in C. Gentry et al. "YOSO: You Only Speak Once: Secure MPC with Stateless Ephemeral Roles". In: CRYPTO. 2021 or in G. Deligios, A. Goel, and C.-D. Liu-Zhang. "Maximally-Fluid MPC with Guaranteed Out- put Delivery". In: CRYPTO. 2023, every data processed (not only the keys) is secret-shared.

The task which is the most expensive, by far, in threshold cryptosystems is not the cost of sharing a key (either by verifiable secret sharing (VSS) from a dealer, or distributed key generation (DKG) as disclosed in N. Shrestha, A. Bhat, A. Kate, and K. Nayak. "Synchronous Distributed Key Generation without Broadcasts". In: ePrint 2021/1635 (2021), since it is paid only once.

It is arguably not either protocol computing the output, e.g., Ethereum is limited to 1M transactions per day. It is instead the task called *(proactive) resharing.* For instance, it is reported by the company "Fireblocks" (8Bn$ market valuation), that all the secret-shared keys which are under their custody, are automatically reshared in "minutes-long intervals" as disclosed in URL: https://www.fireblocks.com/what-is-mpc/.

Likewise, it is reported by Coinbase as disclosed in Y. Lindell. Cryptography and MPC in Coin- baseWallet as a Service (WaaS). 2023 (managing 5M threshold wallets) that a reshare is performed after every signing.

A dynamic reshare is a protocol which takes as inputs old degree-t shares, for some t, from a so-called old committee of n parties P_{[n]}. When the conditions for its robustness are met, then it delivers new degree-t' shares of the same secret to a so-called new committed of n' parties, for some predefined t'. After which, the old committed can safely delete its old shares. A reshare reveals nothing to an adversary which corrupts at most t' parties in the new committee, beyond what it already knew. When n = n' and t = t', the reshare tolerates up to a threshold parameter of t corruptions. A dynamic reshare can be particularized to the so-called static membership setting.

There, the same participant emulates both an old committee member *Pᵢ* and its new committee member counterpart *P'ᵢ.* The time-frames between two consecutive reshares are then called epochs. Hence, (statically) resharing defeats a mobile adversary as disclosed in Y. Frankel, P. Gemmell, P. D. MacKenzie, and M. Yung. "Optimal-resilience proactive public-key cryptosystems". In: FOCS. 1997. Fireblocks. *MPC and key refresh*, i.e., one which can corrupt different subsets of parties per epoch. The full generality of a dynamic reshare is unavoidable every time a party joins or leaves the system. This covers the situation where a party has lost its share while being corrupt, and re-enters the system afresh. It is to be noticed that some MPC procols, called "(maximally)-fluid" or "yoso", as disclosed in C. Gentry et al. "YOSO: You Only Speak Once: Secure MPC with Stateless Ephemeral Roles". In: CRYPTO. 2021 or in G. Deligios, A. Goel, and C.-D. Liu-Zhang. "Maximally-Fluid MPC with Guaranteed Out- put Delivery". In: CRYPTO. 2023, proceed by repeated dynamic reshares from one committee to another distinct one (enhanced with multiplications of secrets, etc.). The scope of the invention concerns small-to-medium sizes of systems, such as the popular parameter {*t* = 1, *n* = 3} for threshold wallets, best known as "2-out-of-3" in E. Network. Introducing The 2-of-3 Threshold Signature Protocol by GG18. 2022 or in J. Chan. Threshold signatures to go prime time. 2022 or in S. (Blockdaemon). MultiSig vs. ThresholdSig. 2019, which is enabled by the threshold signing protocols of R. Gennaro and S. Goldfeder. Fast Multiparty Threshold ECDSA with Fast Trustless Setup. eprint 2019/114, major revision of CCS'18. 2019 or Y. Lindell and A. Nof. "Fast Secure Multi- party ECDSA with Practical Distributed Key Generation". In: CCS. link to 2023 version with I. Haitner and S. Ranellucci. 2018 or T. Ruffing, V. Ronge, E. Jin, J. Schneider- Bensch, and D. Schröder. "ROAST: Robust Asynchronous Schnorr Threshold Signatures". In: CCS. link to the blog of Block- stream. 2022. Concrete example of medium size are the {*t* = 4, *d* = 10, *n =* 15} and {*d* = 7, *n* = 15} of the Liquid and RSK sidechains as disclosed in A. P. Jonas Nick and G. Sanders. Liquid: A Bitcoin Sidechain. 2020 and S. D. Lerner. The cutting edge of sidechains: Liquid and RSK, and also the former {*t* = 5, *n* = 9} of the Roning bridge. These medium size examples were natively implemented with multi-signatures: this is what motivated the robust threshold Schnorr signing as disclosed in T. Ruffing, V. Ronge, E. Jin, J. Schneider- Bensch, and D. Schröder. "ROAST: Ro- bust Asynchronous Schnorr Threshold Signatures". In: CCS. link to the blog of Block- stream. 2022.

Existing reshares do not protect against a fully mobile adversary. It has been known from the document:" Optimal-resilience proactive public-key cryptosystems", In: FOCS, 1997 written by Y. Frankel, P.Gemmell, P. D. MacKenzie and M. Yung that (proactive static) resharing protects against an adversary which is mobile up to the following limitation.

If a party is corrupt during the reshare, then it counts in the t-corruption budget for privacy of both adjacent epochs. So a reshare protects only against an adversary which obeys to the following behavior: when it wants to change u out of t corruptions between two epochs, then it must release u corruptions during all the duration of a reshare. Some protocols such as C. Cachin, K. Kursawe, A. Pysanky, and R. Strobl. "Asynchronous Verifiable Secret Sharing and Proactive Cryptosystems". In: CCS. 2002, or J. Groth. Non-interactive distributed key generation and key resharing. ePrint 2021/339. 2021, or F. Benhamouda et al. "Can a Public Blockchain Keep a Secret?" In: TCC. 2020, or C. Gentry and S. H. and Vadim Lyubashevsky. "Practical Non-interactive PVSS with Thousands of Parties". In: EUROCRYPT. 2022, or T. Yurek, Z. Xiang, Y. Xia, and A. Miller. "Long Live The Honey Badger: Robust Asynchronous DPSS and its Applications". In: USENIX. 2023, are advertized as enabling parties of the old committee to erase their old share as soon as they sent a message, and thus, to guarantee privacy even if the adversary makes its new corruptions just after this point. However, this option is not applicable to real-time threshold systems such as threshold signing, since erasing old shares before the new shares are formed, would make the secret unusable until the end of the reshare. In any case, all these previous reshares had a fixed incompressible critical time-frame during which corruptions count in both epochs: it is the worst-case delay for the new parties to generate keys and publish them on a bulletin board PKI. Indeed, old parties cannot erase their share until they are 100% certain that all the keys of honest new parties were generated and retrieved from the PKI. Indeed, if the key of an honest new party is not published in time on the PKI, then it was considered as corrupt. Then the secret was either leaked or completely lost, depending on the implementation of the reshare. This impact of the PKI delays on the corruption model has been clarified in the last update of T. Yurek, Z. Xiang, Y. Xia, and A. Miller. "Long Live The Honey Badger: Robust Asyn- chronous DPSS and its Applications". In: USENIX. 2023.

Moreover, all previous reshares tolerating an honest majority were further slowed-down by their use of n parallel Byzantine broadcast (BC) subroutines. In any case, neither a bulletin board PKI nor BC are implementable beyond t < n/3 corruptions, even with synchronous point-to-point secure channels. This roughly follows from the Byzantine Generals impossibility as disclosed in L. Lamport, R. Shostak, and M. Pease. "The Byzantine Generals Problem". In: ACM Trans. Program. Lang. Syst. (1982) or in M. Borcherding. "Levels of authentication in distributed agreement". In: WDAG. 1996.

There is a need to provide an improved protocol for proactive secret resharing.

### Summary of the invention

The invention concerns a method of a threshold cryptosystems for resharing a secret between an old committee *P*_{[*n*]}, comprising *n* old participants *Pᵢ*, *i* ranging from 1 to *n,* and a new committee *P'*_{[*n'*]}, comprising *n'* new participants *P'ⱼ*, *j* ranging from 1 to *n',* said old committee *P*_{[*n*]} being parametrized by a privacy threshold *t < n* and a reconstruction threshold *t* + 1, each party *Pᵢ* having a list ${L}_{i}$ of shares *sᵢ* , each share *sᵢ* being tagged by a label for forming a labeled share, the shares of different parties tagged with the same label belonging to a unique consistent system of *t*-out- *n* shares of the secret, the labeled shares being indexed by their origins such as the quorums *I*⁻¹ of a previous committee from which the old participant *Pᵢ* received such labeled share, the labeled share being instantiated as a triple $\left({S}_{{I}^{- 1} \to \left[\left[n\right]\right]}^{@ i}, \left({s}_{{I}^{- 1} \to i}, \hat{{s}_{{I}^{- 1} \to ι}}\right)\right)$ where ${S}_{{I}^{- 1} \to \left[\left[n\right]\right]}^{@ i}$ is a vector of commitments to shares and the share *s*_{*I*⁻¹→*i*} comes with a randomness $\hat{{s}_{{I}^{- 1} \to ι}}$ and form together an opening of the *i - th* commitment *S*_{*I*^{-1→}*i*} , whereas for each such triple in list ${L}_{i}$, each old participant *Pᵢ*:
- generates vectors of degree- *t'* sub-shares: (*s*_{*i*→*j*})_{*j* ∈ [*n'*]} and ${\left(\hat{{s}_{ι \to j}}\right)}_{j ∈ \left[n′\right]}$, along with commitments to them: $\left({S}_{i \to \left[n′\right]}\right) ← \left\{Com\left({s}_{i \to j}, \hat{{s}_{ι \to j}}\right):j∈\left[n′\right]\right\}$;
- send to each new participant *P'ⱼ* a quadruple $\left({S}_{{I}^{- 1} \to \left[\left[n\right]\right]}^{@ i}; {S}_{i \to \left[n′\right]}; \left({s}_{i \to j}, \hat{{s}_{ι \to j}}\right)\right)$.

The method of the invention presents a reshare, named H-RL, which is the first one without requiring any publication on a PKI, nor any form of Byzantine agreement (neither broadcast nor consensus). H-RL achieves the unprecedented latency of only one round of point-to-point communications, of duration equal to Δ the worst-case message delay. Moreover, parties of the old committee send only one batch of messages to the new committee, then immediately erase their old share. Thus, and thanks to the absence of any PKI delays, H-RL is the first reshare protocol which defeats a fully mobile adversary. Furthermore, it operates from any linearly homomorphic commitment scheme, in the plain model of pairwise secure channels. As a bonus, when instantiated with the Pedersen commitment, and thanks to the absence of public- key mechanisms, it thus offers perfect privacy. As a bonus, and unlike accusation-response-based reshares, it preserves privacy of the secret even under asynchrony.

### List of figures

The invention will be better understood, and its various features and advantages will emerge from the following description of a number of exemplary embodiments and its appended figures in which:
Figure 1 depicts a framework for resharing without consensus taking place between an old committee *P*_{[*n*]} and a new one *P'*_{[*n'*]};
Figure 2 is focused on a reshare_{I} in H-RL for I a *t* + 1-sized subset of the old committee *P*_{[*n*]}, according to the invention;
Figure 3 is an example of an algorithm for resharing a secret by a H-RL reshare.

### Detailed description of the invention

Participants: implemented as pieces of software on distinct physical machines and assumed to have network access to communicate with each other.

Old committee: a set of participants.

New committee: another set of participants, may or may not overlap with the set of dealers.

Secret: something shared only confidentially with a few, like a secret key.

Secret key: a bit-string related to a public key, in particular a verification key or an encryption key, enabling some cryptographic operation, in particular digitally signing a message end/or decrypting a ciphertext.

Secret share: a part of a secret.

Linear secret sharing: a secret sharing scheme where the shares can be computed with a matrix operation of a matrix M applied to the secret s and to some random group elements r, e.g., (*s*₁, ... , *sₙ*) *=* (*s*, *r*₁ ..., *r*_{*t-*1}, *rₜ*)*M.*

Shamir secret sharing: a type of threshold secret sharing scheme. Shamir secret sharing is linear.

Secret redistribution protocol: A secret redistribution protocol may also be denoted as a secret resharing protocol. A protocol to update the secret share of a secret. According to some embodiments, the protocol may provide the or updated secret shares to the former holders of the secret shares. According to other embodiments, the protocol may provide the new or updated secret shares to a new, in particular a different set of receivers.

A (n, t)-secret sharing of a secret: A sharing comprising n secret shares, wherein a threshold number *t* + 1 ≤ *n* of the secret shares is sufficient to reconstruct the secret, while *t* shares do not suffice to determine the secret.

In other words, t+1<n is the number that guarantees:
- if at most t parties are corrupt, it is guaranteed that the confidentiality of the secret is preserved;
- if t+1 parties are honest, it is guaranteed that the secret will be passed on to the next committee, i.e. they will have a system for resharing the secret with a common label.

Label: an identifying element providing identification or other information. A share *s*_{*I*^{-1→}*i*} is appended with a label, which is a vector of commitments to shares, of which the i-th one is *s*_{*I*^{-1→}}*ᵢ.* More precisely it is as follows:
${L}_{i} \left[{I}^{- 1}\right] = \left({S}_{{I}^{- 1} \to \left[\left[n\right]\right]}^{@ i}∈{G}^{n + 1},\left({s}_{{I}^{- 1} \to i}∈{F}_{p}, \hat{{s}_{{I}^{- 1} \to ι}}∈{F}_{p}\right)\right)$${L}_{i} \left[{I}^{- 1}\right]$ is an input list. *I*⁻¹ are the indices of the entries of ${L}_{i}$, and are called origins.

The vector ${S}_{{I}^{- 1} \to \left[\left[n\right]\right]}^{@ i}$ is the label. This vector is called $CommToShares \left({S}_{{I}^{- 1}}^{@ i}\right)$ and is defined such that $Com \left({s}_{{I}^{- 1} \to i}, \hat{{s}_{{I}^{- 1} \to ι}}\right) = {S}_{{I}^{- 1} \to i}^{@ i} .$.$\left({s}_{{I}^{- 1} \to i}, \hat{{s}_{{I}^{- 1} \to ι}}\right)$ is a pair of shares, in which the right term *s*_{*I*^{-1→}*i*} is a share of randomness.${G}^{n + 1}$ is a space of label.${F}_{p}$ is a space of share.

Vector of Commitments: A vector of commitments allows to commit to an ordered sequence of values in such a way that it is later possible to open the commitment only with respect to a specific position.

A function $is _ on _ {poly}_{t} \left(\left(S,{S}_{1},…,{S}_{n}\right)∈{G}^{n + 1}\right)$ takes as input any vector of elements of a commitment space, not necessarily correctly formed commitments, and of arbitrary size, which is here *n* + 1. It returns true if and only if they are evaluations of a degree t polynomial at [0, 1 ... .,*n*}, and false otherwise. More formally, it returns true is and only if there exists (*R*₁, ... . . ,*Rₜ*) such that ${S}_{i} = S + {\sum }_{j = 1}^{t} {i}^{j} {R}_{i}$, ∀*i* ∈ [*n*]. If it returns true, (*S*, *S*₁, ..., *Sₙ*) is a vector of commitments to shares with commitment S to the secret, shortened as a *CommToShares*(*S*) or simply CommToShares. In particular a CommToShares satisfies the reconstruction formula for any t-subset *J* ⊂ [*n*]:
$S = {\sum }_{j ∈ J} {λ}_{j}^{J} {S}_{j} .$

A sub-optimal implementation of *is_on_polyₜ* consists in interpolating a degree-t polynomial from, e.g., (*S*, *S*₁, ..., *Sₙ*), then test whether its evaluations at t+1, ..., *n* are equal to *S*_{*t+*1}, ..., *Sₙ*. An *n*-times faster *is_on_poly* is introduced in the document I. Cascudo and B. David. "SCRAPE: Scalable Randomness Attested by Public Entities". In: ACNS. 2017.

The set of integers is denoted as 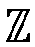 , the set of non-negative ones as 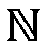 , of which the positive ones as $ℕ * = \left\{1,2,…\right\}$. A space of secrets is considered to be ${F}_{p} : = ℤ /$ $pℤ$ for *p* a prime larger than all *nₑ*, although the invention straightforwardly extends to non-primes. For *F* a finite set, it is denoted |*F*| its cardinality. An empty string is denoted as ⊥. For *m* integer, it is noted |*m*| := {1,..., *m*} and [[*m*]] := {0, ..., *m*}. Vectors with coordinates indexed by some set are denoted with this set as subscript, e.g., *S*_{*i*→[*n'*]}, := (*Sᵢ*, *S*_{*i*→1}, *S*_{*i*→2} , ... , S_{*i*→*n'*} ). A concatenation of vectors is denoted with square brackets, e.g. *S*_{[*n*]} *=* [*S*,*Sₙ*]. The random inputs of algorithms are written after a semicolon. When random inputs are omitted, then this means that they are sampled according to a predefined distribution.

In H-RL, parties of the old committee *P*_{[*n*]} are linked by pairwise secure channels: with parties of the new committee *P'*_{[*n'*]}.

Even if they use certificates do to key-exchange, there is no requirement that the sender uses the same certificate (nor from the same authority) to do its key exchange with another receiver. So this is more flexible than having all the system trust a single entity, called "PKI", to provide a common view on the public key(s) of each participant.

As disclosed in i R. Cramer, I. B. Damgård, and J. B. Nielsen. Secure Multiparty Computation and Secret Sharing, the time is split into consecutive disjunct public intervals called rounds. In the beginning of a round, parties have all the time they need to do computations and send messages over secure channels. In the end of the round, all secure channels deliver the messages which were sent at the beginning. Then, players have all the time they need to do computations, and possibly output data, before the next round.

We recall the Shamir secret sharing algorithm shareₜ( $s ∈ {F}_{p}$, f): takes as input a secret s, and a polynomial f of degree at most t, called a "degree-t polynomial", such that *f*(0) = *s*. Output the shares {*sᵢ* := *f*(*i*), *i* ∈ *I*}. We will use the randomized version of the algorithm, denotes share_{d}(*s*): samples f uniformly at random among the degree-d polynomials such that *f*(0) = *s*; output (*S*₁, ..., *Sₙ*) = share_{d}(*s*, *f*).

For any degree-t polynomial *f*, we call such a vector *s*_{[*n*]} of evaluations, i.e., {*sᵢ* := *f*(*i*) ∀*i* ∈ [*n*]}, a vector of degree-t shares of the secret *s* := *f*(0). *f* is the sharing polynomial. This terminology is unchanged in situations where the secret and the coefficients of the polynomial belong to other ${F}_{p}$ modules than ${F}_{p}$ itself, e.g., 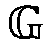 the commitment space. For further formalization fo this generality, we refer to the document I. Cascudo, B. David, L. Garms, and A. Kon- ring. "YOLO YOSO: Fast and Simple Encryption and Secret Sharing". In: ASIACRYPT. 2022, §2.3.

In the context of a secret, *sᵢ*, which is itself a share of some other secret, for any (*t* + 1)-sized subset $I ⊂ \left⌈\left[n\right]\right⌉$, there is a fixed Lagrange polynomial ${λ}_{i}^{I} \left(X\right) = {\prod }_{j ∈ I ∖ \left\{i\right\} \frac{X - j}{i - j}}$. They are such that, from the *t +* 1 evaluations of any degree- *t* polynomial *f* : {*sᵢ* := *f*(*i*), *i* ∈ *I*} then *f* is the linear combination: $f = {\sum }_{i ∈ I} = {λ}_{i}^{I} \left(X\right) {s}_{i}$*.* This is called polynomial interpolation. For instance, denoting ${λ}_{i}^{I} = {λ}_{i}^{I} \left(0\right)$ the Lagrange reconstruction coefficients, we have the linear reconstruction formula of the secret from any *t +* 1 shares: $s = {\sum }_{i ∈ I} {λ}_{i}^{I} {s}_{i}$*.* For *S*_{[*n*]} a vector of shares, any subset of at least (*t* + 1) shares is called a consistent system of (*t*-out-of-*n*) shares. Indeed, the secret can be reconstructed from them.

Informally, any t shares vary uniformly at random, hence, reveal nothing on the secret. More precisely:
t-privacy property: for any t-sized subset *J* ⊂ [*n*], then *f* is sampled uniformly at random, the distribution of share_{d}(*s*, *f*) for a fixed s is equal to the following: sample (*s_{j_{j∈J}}*)uniformly at random; then interpolate (*sᵢ*)_{*i*∈[*n*]\*J*} from the t+1 evaluations {*s*} ∪ (*s_{j_{j∈J}}*)at {0} ∪*J*.

This holds because evaluation at J is a surjective linear map from the space {*degree - t f s.t. f*(0) = *s*}*.*

Linearity property: *share_{d}*(*s, f*) *+ µ.share_{d}*(*s'*, *f'*) = *share_{d}*(*s* + *s'*, *f + µf'*), ∀*s*, *s'*, *f*, *f'*, *µ.*

Moreover, the protocols of the invention require a commitment scheme which commutes with taking linear combinations of committed values, as disclosed in G. Deligios, A. Goel, and C.-D. Liu-Zhang. "Maximally-Fluid MPC with Guaranteed Output Delivery". In: *CRYPTO.* 2023, definition 4.

It is defined a non-interactive and linearly homomorphic commitment scheme with message space ${F}_{p}$, randomness space ${F}_{p}$ and commitment space an ${F}_{p}$-module ( $G , + , 0$) as follows:
Setup(*γ*) takes as input a security parameter, and outputs public parameters;
$Com \left(s∈{F}_{p}; \hat{s}∈{F}_{p}\right)$ the commitment map takes as input the secret and a randomness, and outputs a commitment $S ∈ G$.

Two properties are required:
Linearly homomorphic: $Com \left(s+βs′, \hat{s}+β\hat{s ′}\right) = Com \left(s, \hat{s}\right) + β . Com \left(s′,\hat{s ′}\right)$ $∀ \left(s,s′,\hat{s},\hat{s ′},β\right) ∈ {F}_{p}^{5}$;
Binding: any PPT machine has a negligible probability of outputting (*s*, *ŝ*) and $\left(s′,\hat{s ′}\right)$ such that *s* ≠ *s'* and $Com \left(s, \hat{s}\right) = Com \left(s′,\hat{s ′}\right)$*;*
If *Com*(*s, ŝ* ) = *S*, then *S* is a commitment to s, and that (*s*, *ŝ*) is an opening of S. There are potentially faster ways to open S into s, without having the verifier re-compute *Com*(*s*, *ŝ* ) = *S,* e.g., when opening a batch of many commitments at once.

It is not require commitments to be hiding. H-RL leaks no more than what can be deduced from the input vectors of commitments to shares of the secret, *S*_{[[*n*]]}.

This is in line with the document T. Yurek, Z. Xiang, Y. Xia, and A. Miller. "Long Live The Honey Badger: Robust Asynchronous DPSS and its Applications". In: USENIX. 2023, in which the invention does not require a trapdoored setup.

Although described here with the Shamir secret sharing, HRL can be alternatively implemented with any linear secret sharing scheme, i.e., such that linear operations ons shares comutes with restriction. For exemple, it can be alternatively used with a linear secret sharing scheme over the integers with small coefficients, such as the one described in the §3 of the document: "Partially Non-Interactive Two-Round Lattice-Based Threshold Signatures, Rutchathon Chairattana-Apirom, Stefano Tessaro and Chenzhi Zhu, Asiacrypt, 2024".

The commitment can be instantiated with the one of Pedersen's as disclosed in the document T. P. Pedersen. "Non-Interactive and Information-Theoretic Secure Verifiable Secret Sharing". In: CRYPTO. 1992, it is allowed that the group generators are determined from any external uniform random string. This is an advantage over protocols in which their sampling must be done instead internally to the protocol, in order to enable the simulator to learn a discrete logarithm relation between them. Apart from Pedersen's, the other most known linearly homomorphic commitment scheme in the one of Feldman. It is deterministic in s, hence, takes no second input *ŝ*. It is defined by Com(s)=s.G, where G is any public generator of 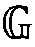 .

There also exists linearly homomorphic commitments based on lattice assumptions, such as in the document S. Gorbunov, V. Vaikuntanathan, and D. Wichs. "Leveled Fully Homomorphic Sig- natures from Standard Lattices". In: STOC. 2015, and the ones of Ajtai and BDLOP as discloses in document V. Lyubashevsky, N. K. Nguyen, and M. Plan- con. "Lattice-Based Zero-Knowledge Proofs and Applications: Shorter, Simpler, and More General". In: CRYPTO. 2022.

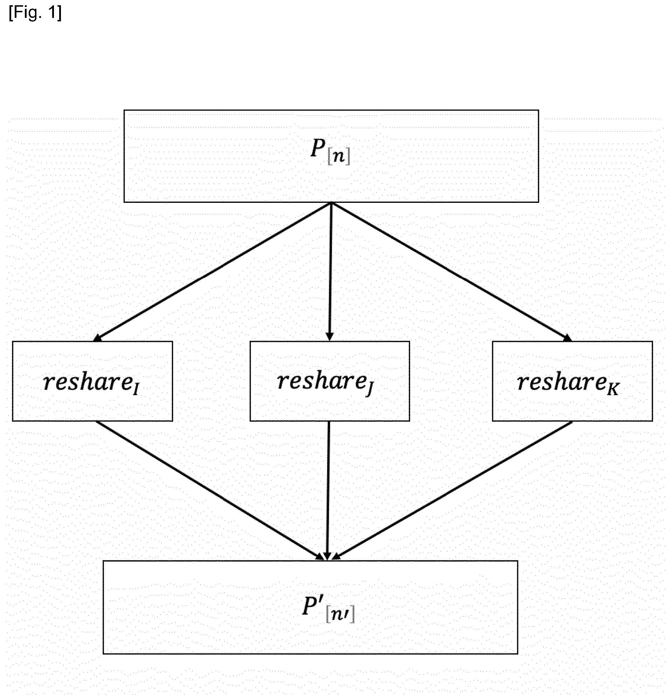

The figure 1 describes a general structure of a reshare. It takes place between an old committee *P*_{[*n*]} and a new one *P'*_{[*n'*]}. Each party *Pᵢ* of the old committee starts with a list ${L}_{i}$ of labeled shares. It inputs ${L}_{i}$ in protocols in parallel, called *reshare_{I}, reshare_{J}, reshare_{K}.* These protocols are indexed by the *t* + 1-sized subsets of *P*_{[*n*]} : *I, J, K,* ... which are called quorums. Each such protocol *reshare_{I}* returns at most one labeled share to each member *P'ⱼ* of the new committee. No *reshare_{I}* leaks any information on the secret, unless the corruptions in *P*_{[*n*]} or *P'*_{[*n*']} go beyond the privacy thresholds *t* or *t'.* Moreover, it is guaranteed that if all members of a quorum *I* are honest, then *reshare_{I}* returns a consistent system of shares, with the same label, to all members of *P'*_{[*n'*]}. Each party *P'ⱼ* ∈ *P'*_{[*n'*]} puts the labeled share received from *reshare_{I}* in its list *L'ⱼ*, at the position indexed by *I*. Hence, *I* is named as the origin of this labeled share *L'ⱼ*[*I*]*.* It is to be noted that a *reshare_{I}* for which not all members of *I* are honest, guarantees no consistent output. In particular, it does not imply Byzantine agreement, neither BC nor consensus.

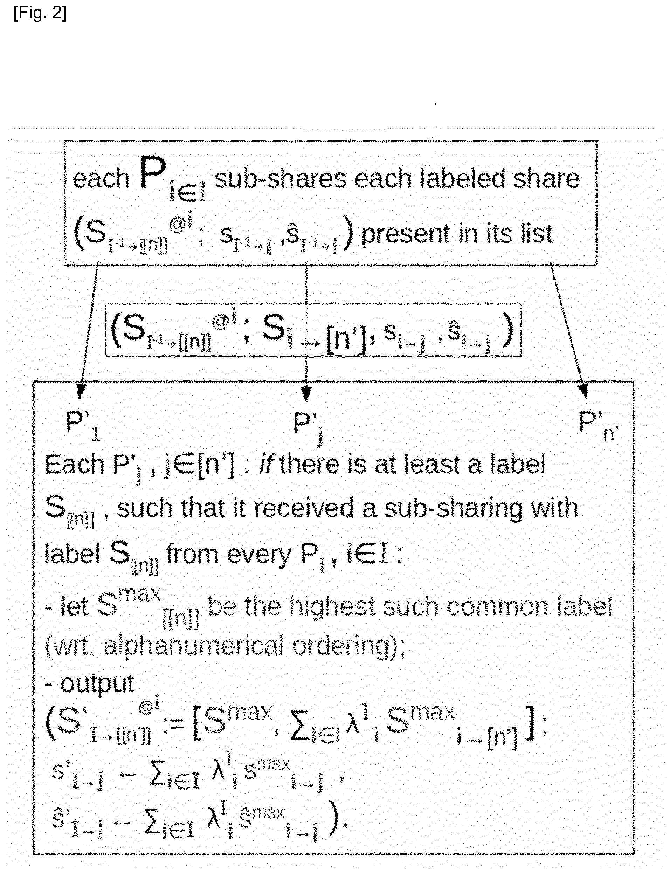

The figure 2 is focused on a reshare_{I} in H-RL for I a *t* + 1-sized subset of the old committee *P*_{[*n*]}, according to the invention.

An instance of H-RL takes places place in a predefined synchronous round. It involves an old committee *P*_{[*n*]} with *n* parties and threshold parameter *t < n.* When used in reshare mode, then it also involves a new committee *P'*_{[*n'*]}, with *n'* parties and threshold parameter *t' < n' .*

When H-RL is used for one single shared secret, then each honest party *Pᵢ* ∈ *P*_{[*n*]} starts with an input list ${L}_{i}$. When used for several shared secrets in parallel, say W, each *Pᵢ* has a distinct list per secret: ${\left({L}_{i}^{\left(w\right)}\right)}_{w ∈ \left[W\right]}$.

*I*⁻¹ are the indices of the entries of ${L}_{i}$, and are called origins. Concretely, an origin *I*⁻¹ ∈ 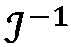 may be the quorum of the previous committee ${P}_{\left[n\right]}^{- 1}$ from which *Pᵢ* received the entry ${L}_{i} \left⌈{I}^{- 1}\right⌉$. Each entry is either empty (⊥), or as follows. It is a share *s*_{*I*_{-1→}*i*}, appended with a label, which is a vector of commitments to shares, of which the i-th one is *s*_{*I*_{-1→}*i*} . As already mentioned:
${L}_{i} \left[{I}^{- 1}\right] = \left({S}_{{I}^{- 1} \to \left[\left[n\right]\right]}^{@ i}∈{G}^{n + 1},\left({s}_{{I}^{- 1} \to i}∈{F}_{p}, \hat{{s}_{{I}^{- 1} \to ι}}∈{F}_{p}\right)\right) ,$ such that:
$\left(α\right) is _ on _ {poly}_{t} \left({S}_{{I}^{- 1} \to \left[\left[n\right]\right]}^{@ i}\right) = true .$. The vector ${S}_{{I}^{- 1} \to \left[n\right]}^{@ i}$ is called the label. The 0-th coordinate of this vector ${S}_{{I}^{- 1} \to \left[\left[n\right]\right]}^{@ i}$ is named ${S}_{{I}^{- 1}}^{@ i}$. The vector ${S}_{{I}^{- 1} \to \left[\left[n\right]\right]}^{@ i}$ is also called a $CommToShares \left({S}_{{I}^{- 1}}^{@ i}\right)$.
and such that: $\left(β\right) Com \left({s}_{{I}^{- 1} \to i}, \hat{{s}_{{I}^{- 1} \to ι}}\right) = {S}_{{I}^{- 1} \to i}^{@ i}$.

The expression $\left({s}_{{I}^{- 1} \to i}, \hat{{s}_{{I}^{- 1} \to ι}}\right)$ is called a pair of shares, of which the right term $\hat{{s}_{{I}^{- 1} \to ι}}$ is a share of randomness.

For any t+1 pairs of shares with the same label ${\left({s}_{{I}^{- 1} \to i}, \hat{{s}_{{I}^{- 1} \to ι}}\right)}_{i ∈ I}$, it is possible to apply the reconstruction formula Equation:
$s = {\sum }_{i ∈ I} {λ}_{i}^{I} {s}_{i} .$
$\hat{s} = {\sum }_{i ∈ I} {λ}_{i}^{I} {\hat{s}}_{i} .$

to them yields an opening (*s, ŝ*) of S. This is a straightforward consequence of the linearity of Com. It is formalized as: "reconstruction commutes with commitment opening".

It follows from *is_on_polyt*(*S*_{[*n*]}) = true, that equation:
It is proven as follow: substituting in the Right Hand Side: ${S}_{i} = Com \left({s}_{i}, \hat{{s}_{ι}}\right)$ then applying linearity of Com, gives: ${S}_{\left[n\right]} = Com \left({\sum }_{i ∈ I} {λ}_{i}^{I} {s}_{i},{\sum }_{i ∈ I} {λ}_{i}^{I} \hat{{s}_{ι}}\right)$ which is egal to $Com \left({s}_{i}, \hat{{s}_{ι}}\right)$ by the equations $s : = {\sum }_{i ∈ I} {λ}_{i}^{I} {s}_{i}$ and $\hat{s} : = {\sum }_{i ∈ I} {λ}_{i}^{I} \hat{{s}_{ι}}$. The conclusion follows from: $S = {\sum }_{j ∈ J} {λ}_{j}^{J} {S}_{j}$*.*

The triple $\left({S}_{{I}^{- 1} \to \left[\left[n\right]\right]}^{@ i}, \left({s}_{{I}^{- 1} \to i}, \hat{{s}_{{I}^{- 1} \to ι}}\right)\right)$ is named a vector of commitments to shares with an opening at i, shortened as a CommToShares&j-opening. The superscript @i is used because two parties *Pᵢ* and *P_{ℓ}* not have the same label indexed by *I*^{*-*1}, i.e., ${S}_{{I}^{- 1} \to \left[\left[n\right]\right]}^{@ i} \neq {S}_{{I}^{- 1} \to \left[\left[n\right]\right]}^{@ l}$. This happens if *I*⁻¹ contained a corrupt party.

All labels are public, in the sense that they are potentially known by the adversary. However, honest parties are not supposed to have any initial knowledge of the labels in the lists of each other.

Each party *P'ⱼ* ∈ *P'*_{[*n'*]} outputs a list ${L}_{j}^{′}$ at the end of the round. It indexed by the set 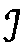 of the $\left(\begin{matrix}t + 1 \\ n\end{matrix}\right)$ quorums of *P*_{[*n*]}, i.e., the (t+1)-sized subsets $I ⊂ \left⌈n\right⌉$. Each entry of the list, ${L}_{j}^{′} \left[I\right]$, is either empty (⊥), or, a CommToShares&j-opening.

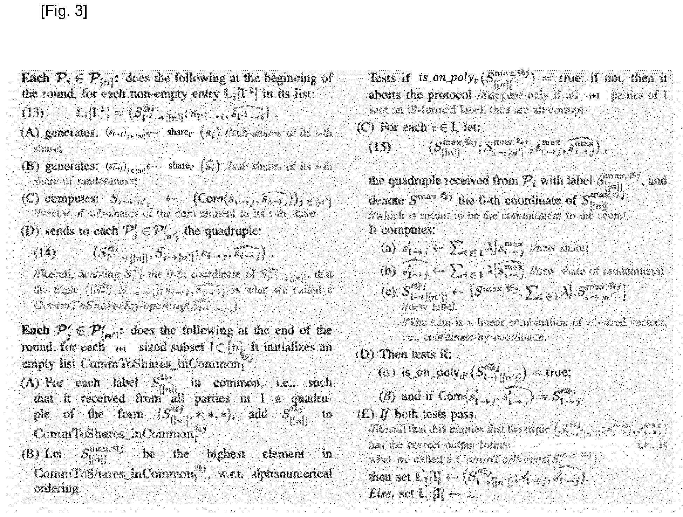

Figure 3 shows an example of the algorithm for resharing a secret by a H-RL reshare.

As explained above, each party *Pᵢ* ∈ *P*_{[*n*]}, for each origin *I*⁻¹, generates sub-shares of the entry ${L}_{i} \left[{I}^{- 1}\right]$ of its list. Precisely, it generates sub-shares of its share *s*_{*I*_{-1→}*i*} and of the share of randomness $\hat{{s}_{{I}^{- 1} \to ι}}$, from which it deduces sub-shares of the commitment at i: ${S}_{{I}^{- 1} \to i}^{@ i}$ i.e. generates [*s*_{*i*→*j*}: j=1..n'] = share(*s*_{*I*_{-1→}*i*}) and generates $\left[\hat{{s}_{ι \to J}}:j=1..n′\right] = share \left(\hat{{s}_{{I}^{- 1} \to ι}}\right)$.

Then it distributes the (pairs of) sub-shares to each *P'ⱼ* ∈ *P'*_{[*n'*]}, tagged with their label in ${L}_{i} : {S}_{{I}^{- 1} \to \left[\left[n\right]\right]}$ and also tagged with the vector of commitment to the sub-shares: ${s}_{i \to \left[n′\right]} = \left[Com\left({s}_{i \to j}, \hat{{s}_{ι \to j}}\right):j=1..n′\right]$. At the end of the round, each party *Pᵢ* ∈ *P*_{[*n*]}, for each quorum *I* ∈ [*n*] detects the label(s) *S*_{[*n*]}, such that it received pairs of sub-shares from all parties in *I* with this same label S_{[*n*]}. In the event were all parties in *I* would be honest, then this means that they had a consistent system of shares with this label, and they have distributed sub-shares of it. Thus, it is the situation of the well-known GMW-style resharing, formalized in the document Y. Desmedt and S. Jajodia. Redistributing se-cret shares to new access structures and its applications. Tech Report, George Mason U. July 1997. Namely, if each *P'ⱼ* ∈ *P'*_{[*n'*]} applies the reconstruction formula to the (pairs of) sub-shares with the common label *S*_{[[*n*]]} received from *I*, to obtain a new (pair of) shares, then it is guaranteed that the new (pairs of) shares obtained by *P'*_{[*n'*]} form a consistent system of degree-t' shares of the same secret, which was to be shown. For the same *I*, there may be several labels in common. The method H-RL of the invention proposes to chose the highest label in common, w.r.t. alphanumerical ordering.

The computation and communication of the major steps of H-RL reshare of the algorithm of figure 3 is implemented and measured. It is used a gnark-crypto library as disclosed in the document G. Botrel, T. Piellard, Y. E. Housni, A. Tabaie, and I. Kubjas. ConsenSys/gnark- crypto: v0.6.1. 2022, with commitment space 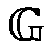 a group originating from a Barreto-Naherig curve BN254. Computations were carried out on a laptop running an Intel Core i5-8265U CPU with 8 cores as 1.6GHZ and 16GB RAM.

For each element of the ( $\begin{matrix}n \\ t + 1\end{matrix}$)-sized list ${L}_{i}$, a message of the form (*S*_{*I*_{-1→}[*n*]}; *S*_{*i*→[*n'*]}; *, *), where only the $\left(*, *\right) ∈ {F}_{p}^{2}$ depend on the recipient. The communication complexity is thus dominated by the vectors ${S}_{{I}^{- 1} \to \left[n\right]} ∈ {G}^{n + 1}$ and *S*_{*i*→[*n'*]} $∈ G$ which are multicast, i.e, sent identically to all. Multicasting allows potentially more optimized implementations than point to point secret channels. The computation complexity of *Pᵢ* is dominated by the computation of the ( $\begin{matrix}n \\ t + 1\end{matrix}$) n-sized public vectors of commitments to sub-shares ${S}_{i \to \left[n′\right]} ∈ {G}^{n + 1}$. However for Feldman commitments, each of these vectors is obtained by the multiplication of an n-sized secret vector of secret shares in ${F}_{p}$, by a fixed public group generator $G ∈ G$. Likewise, for Pedersen commitments, it amounts to twice this work. Such a multiplication is known as a BatchScalarMultiplication by $G ∈ G$, and gnark-crypto implements optimized algorithms for a large number ( $\begin{matrix}n \\ t + 1\end{matrix}$) of them. In a reshare, each party *Pᵢ* ∈ *P*_{[*n*]}, for each element of its list ${L}_{i}$, sends to all a message of the form (*S*_{*I*_{-1→}[[*n*]]}; *S*_{*i*→[*n'*]}; *, *), where only the $\left(*, *\right) ∈ {F}_{p}^{2}$ depend on the recipient.

Each new committee member *P'ⱼ* ∈ *P'*_{[*n'*]}, has its computation complexity which is dominated by the test of polynomiality, at step D, (*α*) in figure 3, applied on the new label vector in ${G}^{n + 1}$. The SCRAPE test as disclosed in the document I. Cascudo and B. David. "SCRAPE: Scalable Randomness Attested by Public Entities". In: ACNS. 2017.

The test consists in testing the nullity of the inner-product of this vector, by a vector in ${F}_{p}^{n + 1}$ equal to evaluations of a random polynomial. Gnark-crypto implements well-known algorithms for computing large inner products, also known as multiexponentiations. It is made *P'ⱼ* test the nullity, all-at-once, for all the ( $\begin{matrix}n \\ t + 1\end{matrix}$) new label vectors (one per origin *I*). Such a batch test of nullity, consists in computing all-at-once the weighted sum of the ( $\begin{matrix}n \\ t + 1\end{matrix}$) inner products, weighted by random coefficients, e.g., powers of a random number in ${F}_{p}$, as disclosed in the document M. Bellare, J. A. Garay, and T. Rabin. "Fast batch verification for modular exponentiation and digital signatures". In: EUROCRYPT. 1998.

At the end of the round, each *P'ⱼ* for each t+1-sized subset *I* ⊂ [*n*] initializes an empty list ${CommToShares_inCommon}_{I}^{@ j}$.

For each label ${S}_{\left[n\right]}^{@ j}$ received from all players of I, called label in common, among a plurality of labels ${S}_{{I}^{- 1} \to \left[\left[n\right]\right]}^{@ i}$, add the label ${S}_{\left[\left[n\right]\right]}^{@ j}$ received from I to the list $CommToShares _ {inCommon}_{I}^{@ j}$.

The method comprises the step of selecting the highest label ${S}_{\left[n\right]}^{@ j}$ in the list $CommToShares _ {inCommon}_{I}^{@ j}$, with reference to alphanumerical ordering, such highest label ${S}_{\left[\left[n\right]\right]}^{@ j}$ in common being named ${S}_{\left[\left[n\right]\right]}^{max , @ j}$.

Indeed, the method comprises a test of polynomiality (*is_on_polyₜ*) on the label ${S}_{\left[\left[n\right]\right]}^{max , @ j}$*.*

If the test of polynomiality (*is_on_polyₜ*) on the label ${S}_{\left[\left[n\right]\right]}^{max , @ j}$ is true, for each *i* ∈ *I*, the quadruple received from *Pᵢ* is $\left({S}_{\left[\left[n\right]\right]}^{max , @ j}; {S}_{i \to \left[n′\right]}^{max , @ j}; {s}_{i \to j}^{max} ,\hat{{s}_{ι \to j}^{max}}\right)$, with a label ${S}_{\left[\left[n\right]\right]}^{max , @ j}$ and *S^{max,@j}* the 0-th coordinate of ${S}_{\left[\left[n\right]\right]}^{max , @ j}$, the method comprises the steps of:
- generating a new share *s'*_{*I*→*j*} based on the equation: ${\sum }_{i ∈ I} {λ}_{i}^{I} {s}_{i \to j}^{max}$*;*
- generating a new share of randomness $\hat{s {′}_{I \to j}}$ based on the equation: ${\sum }_{i ∈ I} {λ}_{i}^{I} \hat{{s}_{ι \to j}^{max}}$
- computing a new label $S {′}_{I \to \left[\left[n′\right]\right]}^{@ j}$ egal to the vector of sized n+1 $\left[{S}^{max , @ j}, {\sum }_{i ∈ I} {λ}_{i}^{I} {S}_{i \to \left[n′\right]}^{max , @ j}\right]$.

The method comprises a test of polynomiality (*is_on_poly_{t'}*) on the label $S {′}_{I \to \left[n′\right]}^{@ j}$, and a test of commitment scheme (Com) taking as input the new share *s'*_{*I*→j} and the new share of randomness $\hat{s {′}_{I \to j}}$.
- if $is _ on _ {poly}_{t ′} \left(S{′}_{I \to \left[\left[n\right]\right]}^{@ j}\right) = true ;$ and
- if $Com \left(s{′}_{I \to j}, \hat{s {′}_{I \to j}}\right) = S {′}_{I \to j}^{@ j} ;$
then an entry ${L}_{j} \left[I\right]$ comprises a triple $\left({S}_{I \to \left[\left[n′\right]\right]}^{{′}^{@ j}}; s{′}_{I \to j}, \hat{s {′}_{I \to j}}\right)$ else the entry ${L}_{j} \left[I\right]$ is empty (⊥).

## Claims

1. Proactive secret resharing method for resharing a least one secret (s) between an old committee (*P*_{[*n*]}), comprising *n* old participants (*Pᵢ*, *i*) ranging from 1 to *n*, and a new committee (*P'*_{[*n'*]}) comprising *n'* new participants (*P'ⱼ*), *j* ranging from 1 to *n'*, said old committee (*P*_{[*n*]}) being parametrized by a privacy threshold *t < n*, each party *Pᵢ* having a list ${L}_{i}$ of shares of the secret (s), each share being indexed by an index denoted *I*⁻¹ and called origin appended to a label ( ${S}_{{I}^{- 1} \to \left[\left[n\right]\right]}^{@ i}$) for forming a labeled share, the labeled shares being indexed by their origins such as the quorums *I*⁻¹ of a previous committee from which the old participant *Pᵢ* received such labeled shares, the labeled shares being instantiated as a triple $\left({S}_{{I}^{- 1} \to \left[\left[n\right]\right]}^{@ i}; {s}_{{I}^{- 1} \to i}; \hat{{s}_{{I}^{- 1} \to ι}}\right)$ where ${S}_{{I}^{- 1} \to \left[\left[n\right]\right]}^{@ i}$ is a vector of commitments to shares which plays the role of a label, *s*_{*I*_{-1→}*i*} is a ith-share and $\hat{{s}_{{I}^{- 1} \to ι}}$ is a ith-share of randomness, whereas for each such triple in list ${L}_{i}$, each old participant *Pᵢ* at the beginning of a round :
- generates sub-shares (*s*_{*i*→*j*_{*j* ∈ [*n'*})]} of the ith-share (*s*_{*I*_{-1→}*i*});
- generates sub-shares ${\left(\hat{{s}_{ι \to j}}\right)}_{j ∈ \left[n′\right]}$ of the ith-share of randomness ( $\hat{{s}_{{I}^{- 1} \to ι}}$);
- computes a vector of sub-shares (*S*_{*i*→[*n*']}) by using a linearly homomorphic commitment scheme taking as input the ith-share (*s*_{*I*_{-1→}*i*}) and the ith-share of randomness ( $\hat{{s}_{{I}^{- 1} \to ι}}$);
- send to each new participant *P'ⱼ* a quadruple $\left({S}_{{I}^{- 1} \to \left[\left[n\right]\right]}^{@ i}; {S}_{i \to \left[n′\right]}; {s}_{i \to j}; \hat{{s}_{ι \to j}}\right)$.

2. Method according to claim 1, wherein, at the end of the round, each *P'ⱼ* for each t+1-sized subset *I* ⊂ [*n*] initializes an empty list $CommToShares _ {inCommon}_{I}^{@ j}$.

3. Method according to claim 2, wherein for each label ( ${S}_{\left[n\right]}^{@ j}$) in common among a plurality of labels ( ${S}_{{I}^{- 1} \to \left[\left[n\right]\right]}^{@ i}$) received from *I*, add the label ( ${S}_{\left[\left[n\right]\right]}^{@ j}$) to the list $CommToShares _ {inCommon}_{I}^{@ j}$.

4. Method according to claim 3, comprising the step of selecting the highest label ( ${S}_{\left[\left[n\right]\right]}^{@ j}$) in common in the list $CommToShares _ {inCommon}_{I}^{@ j}$, with reference to alphanumerical ordering, such highest label ${S}_{\left[\left[n\right]\right]}^{@ j}$ in common being named ${S}_{\left[\left[n\right]\right]}^{max , @ j}$.

5. Method according to claim 4, comprising a test of polynomiality (*is_on_polyₜ*) on the label ${S}_{\left[\left[n\right]\right]}^{max , @ j}$*.*

6. Method according to claim 5, if the test of polynomiality (*is_on_polyₜ*) on is true, for each *i* ∈ *I*, the quadruple received from *Pᵢ* is $\left({S}_{\left[\left[n\right]\right]}^{max , @ j}; {S}_{i \to \left[n′\right]}^{max , @ j}; {S}_{i \to j}^{max},\hat{{S}_{ι \to j}^{max}}\right)$, with a label ${S}_{\left[\left[n\right]\right]}^{max , @ j}$ and *S^{max,@j}* the 0-th coordinate of ${S}_{\left[\left[n\right]\right]}^{max , @ j}$, the method comprises the steps of:
- generating a new share (*s*'_{*I*→*j*} ) based on the equation: ${\sum }_{i ∈ I} {λ}_{i}^{I} {s}_{i \to j}^{max}$;
- generating a new share of randomness ( $\hat{s {′}_{I \to j}}$) based on the equation: ${\sum }_{i ∈ I} {λ}_{i}^{I} \hat{{s}_{ι \to j}^{max}}$
- computing a new label ( ${S}_{I \to \left[n′\right]}^{′ @ j}$) based on the couple $\left[{S}^{max , @ j}, {\sum }_{i ∈ I} {λ}_{i}^{I} {S}_{i \to \left[n′\right]}^{max , @ j}\right]$, with ${λ}_{i}^{I}$ the Lagrange coefficients.

7. Method according to claim 6, comprising a test of polynomiality (*is_on_poly_{t'}*) on the label ( ${S}_{I \to \left[n′\right]}^{′ @ j}$) and a test of commitment scheme (Com) taking as input the new share (*s'*_{*I*→*j*}) and the new share of randomness ( $\hat{s {′}_{I \to j}}$).

8. Method according to claim 7, in which:
- if $is _ on _ {poly}_{t ′} \left({S}_{I \to \left[n′\right]}^{′ @ j}\right) = true ;$ and
- if $Com \left(s{′}_{I \to j}, \hat{s {′}_{I \to j}}\right) = {S}_{I \to j}^{′ @ j} ;$
then an entry ${L}_{j} \left[I\right]$ comprises a triple $\left({S}_{I \to \left[n′\right]}^{′ @ j}; s{′}_{I \to j}, \hat{s {′}_{I \to j}}\right)$ else the entry ${L}_{j} \left[I\right]$ is empty (1).

9. Method according one of the claims 1 to 8, wherein the vector of commitments to shares ${S}_{{I}^{- 1} \to \left[\left[n\right]\right]}^{@ i}$ comprises *n* + 1 parameters (*S*, *S*₁, ..., *Sₙ*) with a commitment (*S*) to the secret (s) satisfying a reconstruction formula for any t-subset *I* ⊂ [*n*]: $S = {\sum }_{i ∈ I} {λ}_{i}^{I} {S}_{i} .$

10. Method according one of the claims 1 to 9, wherein the shares of different parties tagged with the same label belongs to a unique consistent system of *t*-out- *n* shares of the secret.

11. Method according one of the claims 1 to 10, wherein the ith-share *s*_{*I*_{-1→}*i*} and the ith-share of randomness $\hat{{s}_{{I}^{- 1} \to ι}}$ forming together an opening of an *i - th* commitment (*S*_{*I*_{-1→}*i*}) of the vector of commitments to shares ( ${S}_{{I}^{- 1} \to \left[\left[n\right]\right]}^{@ i}$).

12. Method according one of the claims 1 to 11, wherein the linearly homomorphic commitment scheme is a commitment scheme of Feldman.

13. Method according one of the claims 1 to 11, wherein the linearly homomorphic commitment scheme is commitment scheme of Pedersen.

14. Method according to any of claim 1 to 13, wherein the label is a couple $\left({I}^{- 1}, {S}_{{I}^{- 1} \to \left[\left[n\right]\right]}^{@ i}\right)$.

15. A computer program product, said program comprising:
- a non-transitory computer-readable storage medium; and
- a program code stored on the non-transitory computer-readable storage medium that, when executed by one or more processors, causes the one or more processors to implement the method according to one of the claims 1 to 14.

## Amended claims

### Amended claims in accordance with Rule 137(2) EPC.

1. Proactive secret resharing method for resharing a least one secret (s) between an old committee (*P*_{[*n*]}), comprising *n* old participants *Pᵢ, i* ranging from 1 to *n,* and a new committee (*P*'_{[*n*']}) comprising n' new participants *P'ⱼ*, *j* ranging from 1 to *n',* said old committee (P_{[*n*]}) being parametrized by a privacy threshold *t < n*, each party *Pᵢ* having a list ${L}_{i}$ of shares of the secret (s), each share being indexed by an index denoted *I*⁻¹ and called origin appended to a label $\left({S}_{{I}^{- 1} \to \left[\left[n\right]\right]}^{@ i}\right)$ for forming a labeled share, the labeled shares being indexed by their origins such as the quorums *I*⁻¹ of a previous committee from which the old participant *Pᵢ* received such labeled shares, the labeled shares being instantiated as a triple " ${S}_{{I}^{- 1} \to \left[\left[n\right]\right]}^{@ i}$; *s*_{*I*-1→*i*}; $\hat{{s}_{{I}^{- 1} \to ι}}$" where ${S}_{{I}^{- 1} \to \left[\left[n\right]\right]}^{@ i}$ is a vector of commitments to the shares s_{*I*-1→1,...,}*s*_{*I*-1→*n*} of secret (s) which plays the role of a label, *s*_{*I*-1→}*ᵢ* is a ith-share and $\hat{{s}_{{I}^{- 1} \to ι}}$ is a ith-share of randomness associated with the ith-share, whereas for each such triple in list ${L}_{i}$ , each old participant *Pᵢ* at the beginning of a round :
- generates sub-shares (*s*_{*i*→*j*})_{*j*∈[*n'*]} of the ith-share (*s*_{*I*-1→*i*});
- generates sub-shares ${\left(\hat{{s}_{i \to j}}\right)}_{j ∈ \left[n′\right]}$ of the ith-share of randomness $\left(\hat{{s}_{{I}^{- 1} \to ι}}\right)$;
- computes a vector of sub-shares (*S*_{*i*→[*n*']}) by using a linearly homomorphic commitment scheme taking as input the ith-share (*s*_{*I*-1→*i*}) and the ith-share of randomness $\left(\hat{{s}_{{I}^{- 1} \to ι}}\right)$,
- send to each new participant *P'ⱼ*, over a pairwise secure channel, a quadruple " ${S}_{{I}^{- 1} \to \left[\left[n\right]\right]}^{@ i}$; *S*_{*i*→[*n'*]};*s*_{*i*→*j*}; $\hat{{s}_{ι \to j}}$".

2. Method according to claim 1, wherein, at the end of the round, each *P'ᵢ* for each t+1-sized subset *I* ⊂ [*n*] initializes an empty list ${CommToShares_inCommon}_{I}^{@ j}$.

3. Method according to claim 2, wherein for each label $\left({S}_{\left[n\right]}^{@ j}\right)$ in common among a plurality of labels $\left({S}_{{I}^{- 1} \to \left[\left[n\right]\right]}^{@ i}\right)$ received from I, add the label $\left({S}_{\left[\left[n\right]\right]}^{@ j}\right)$ to the list ${CommToShares_inCommon}_{I}^{@ j}$.

4. Method according to claim 3, comprising the step of selecting the highest label $\left({S}_{\left[\left[n\right]\right]}^{@ j}\right)$ in common in the list ${CommToShares_inCommon}_{I}^{@ j}$, with reference to alphanumerical ordering, such highest label ${S}_{\left[\left[n\right]\right]}^{@ j}$ in common being named ${S}_{\left[\left[n\right]\right]}^{max , @ j}$.

5. Method according to claim 4, comprising a test of polynomiality (*is_on_polyt*) on the label ${S}_{\left[\left[n\right]\right]}^{max , @ j}$*.*

6. Method according to claim 5, if the test of polynomiality (*is_on_polyₜ*) on is true, for each *i* ∈ *I*, the quadruple received from *Pᵢ* is $" {S}_{\left[\left[n\right]\right]}^{max , @ j} ; {S}_{i \to \left[n′\right]}^{max , @ j} ; {S}_{i \to j}^{max} , \hat{{S}_{ι \to j}^{max}} "$, with a label ${S}_{\left[\left[n\right]\right]}^{max , @ j}$ and *s^{max,@ j}* the 0-th coordinate of ${S}_{\left[\left[n\right]\right]}^{max , @ j}$, the method comprises the steps of:
- generating a new share (*s*'_{*I*→*j*} ) based on the equation: ${\sum }_{i ∈ I} {λ}_{i}^{I} {s}_{i \to j}^{max}$;
- generating a new share of randomness $\left(\hat{s {′}_{I \to j}}\right)$ based on the equation: ${\sum }_{i ∈ I} {λ}_{i}^{I} \hat{{s}_{ι \to j}^{max}}$
- computing a new label $\left({S}_{I \to \left[n′\right]}^{′ @ j}\right)$ based on the couple $\left[{S}^{max , @ j}, {\sum }_{i ∈ I} {λ}_{i}^{I} {S}_{i \to \left[n′\right]}^{max , @ j}\right]$, with ${λ}_{i}^{I}$ the Lagrange coefficients.

7. Method according to claim 6, comprising a test of polynomiality (*is_on_polyₜ,*) on the label ( ${S}_{I \to \left[n′\right]}^{′ @ j}$) and a test of commitment scheme (Com) taking as input the new share (*s'*_{*I*→*j*}) and the new share of randomness $\left(\hat{s {′}_{I \to j}}\right)$.

8. Method according to claim 7, in which:
- if $is _ on _ {poly}_{t ′} \left({S}_{I \to \left[n′\right]}^{′ @ j}\right) = true$; and
- if $Com \left(s{′}_{I \to j}, \hat{s {′}_{I \to j}}\right) = {S}_{I \to j}^{′ @ j}$;
then an entry ${L}_{j} \left[I\right]$ comprises a triple $\left({S}_{I \to \left[n′\right]}^{′ @ j}; s{′}_{I \to j}, \hat{s {′}_{I \to j}}\right)$ else the entry ${L}_{j} \left[I\right]$ is empty (1).

9. Method according one of the claims 1 to 8, wherein the vector of commitments to shares ${S}_{{I}^{- 1} \to \left[\left[n\right]\right]}^{@ i}$ comprises n + 1 parameters (*S, S*₁, ..., *Sₙ*) with a commitment (S) to the secret (s) satisfying a reconstruction formula for any t-subset *I* ⊂ [*n*]: $S = {\sum }_{i ∈ I} {λ}_{i}^{I} {S}_{i} .$

10. Method according one of the claims 1 to 9, wherein the shares of different parties tagged with the same label belongs to a unique consistent system of t-out- n shares of the secret.

11. Method according one of the claims 1 to 10, wherein the ith-share *s*_{*I*-1→*i*} and the ith-share of randomness $\hat{{s}_{{I}^{- 1} \to ι}}$ forming together an opening of an *i - th* commitment (*S*_{*I*-1→*i*}) of the vector of commitments to shares $\left({S}_{{I}^{- 1} \to \left[\left[n\right]\right]}^{@ i}\right)$.

12. Method according one of the claims 1 to 11, wherein the linearly homomorphic commitment scheme is a commitment scheme of Feldman.

13. Method according one of the claims 1 to 11, wherein the linearly homomorphic commitment scheme is commitment scheme of Pedersen.

14. A computer program product, said program comprising:
- a non-transitory computer-readable storage medium; and
- a program code stored on the non-transitory computer-readable storage medium that, when executed by one or more processors, causes the one or more processors to implement the method according to one of the claims 1 to 13.
